# EUROPEAN PATENT APPLICATION

(11) **EP 4 804 274 A1**
(43) Date of publication of application: **09.09.2026**
(21) Application number: 24884647.9
(22) Date of filing: 28.10.2024
(51) Int. Cl.: H01M 10/0566, H01M 10/42, H01M 10/054

(54) **BATTERY**

(30) Priority: 30.10.2023 CN 202311419623
(71) Applicant: Zhuhai CosMX Battery Co., Ltd., Zhuhai, Guangdong 519180 (CN)
(72) Inventor: WANG, Hai, Zhuhai, Guangdong 519180 (CN); HUANG, Huawen, Zhuhai, Guangdong 519180 (CN); LI, Suli, Zhuhai, Guangdong 519180 (CN); CAO, Qixiong, Zhuhai, Guangdong 519180 (CN)
(74) Representative: Murgitroyd & Company
(86) International application number: PCT/CN2024/127672
(87) International publication number: WO 2025/092644

(57) **Abstract**

A battery comprises a positive electrode plate and an electrolyte solution, wherein the positive electrode plate has an XRD pattern comprising two diffraction peaks at 15°-20° and 40°-43°, with the peak intensity of the diffraction peak at 15°-20° being H₁, and the peak intensity of the diffraction peak at 40°-43° being H₂; the electrolyte solution comprises propylene carbonate, with the content by weight of propylene carbonate being A, based on the total weight of the electrolyte solution; and the battery satisfies: H₁/H₂ + A ≥ 0.6. The interfacial reactions of the battery can be reduced, thereby improving the cycling stability and storage performance of the battery.

## Description

### TECHNICAL FIELD

The present invention relates to the technical field of batteries, and in particular to a battery.

### BACKGROUND

Sodium-ion batteries have a wide range of application prospects due to their comprehensive advantages such as low cost, rich resources and environmental friendliness. The working principle of sodium-ion batteries is similar to that of lithium-ion batteries, primarily relying on the reversible intercalation and deintercalation of sodium ions between a positive electrode and a negative electrode to achieve energy storage and release. However, the electrolyte solution of sodium-ion batteries tends to react on the surface of the positive electrode plate. This occurs because the common electrolyte solutions cannot form a CEI film well on the positive electrode, leading to unstable cycling performance and poor storage performance of sodium-ion batteries.

### SUMMARY

In order to overcome the aforementioned problems in the prior art, the present invention provides a battery. For the battery of the present invention, the interfacial reactions therein can be reduced, thereby improving the cycling stability and storage performance of the battery.

The present invention provides a battery, comprising a positive electrode plate and an electrolyte solution, wherein the positive electrode plate has an XRD pattern comprising two diffraction peaks at 15°-20° and 40°-43°, with the peak intensity of the diffraction peak at 15°-20° being H₁, and the peak intensity of the diffraction peak at 40°-43° being H₂; the electrolyte solution comprises propylene carbonate, with the content by weight of the propylene carbonate being A, based on the total weight of the electrolyte solution; and the battery satisfies: H₁/H₂ + A ≥ 0.6.

By means of the above technical solution, the present invention has at least the following advantages over the prior art:

In the battery of the present invention, the synergistic cooperation between the positive electrode plate and the electrolyte solution enables the electrolyte solution to form a CEI film on the surface of the positive electrode plate, thus reducing interfacial reactions and thereby improving the cycling stability and storage performance of the battery.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values tof various ranges and individual point values, and between individual point values, and these numerical value ranges should be regarded as specifically disclosed herein.

### BRIEF DESCRIPTION OF THE DRAWINGS

FIG. 1 shows an XRD pattern of a positive electrode plate provided in an embodiment of the present invention.
FIG. 2 shows an XRD pattern of a positive electrode plate provided in a comparative example of the present invention.

### DETAILED DESCRIPTION OF THE EMBODIMENTS

Hereinafter, specific embodiments of the present invention will be described in detail. It should be understood that the specific embodiments described herein are merely intended to illustrate and explain the present invention but are not intended to limit the present invention.

It should be noted that the numerical representations of "first", "second", etc., in the present invention are merely used to distinguish different substances or modes of use rather than indicating an order.

The present invention provides a battery, comprising a positive electrode plate and an electrolyte solution, wherein the positive electrode plate has an XRD pattern comprising two diffraction peaks at 15°-20° and 40°-43°, with the peak intensity of the diffraction peak at 15°-20° being H₁, and the peak intensity of the diffraction peak at 40°-43° being H₂; the electrolyte solution comprises propylene carbonate, with the content by weight of the propylene carbonate being A, based on the total weight of the electrolyte solution; and the battery satisfies: H₁/H₂ + A ≥ 0.6.

The XRD pattern of the positive electrode plate shows two diffraction peaks at 15°-20° and 40°-43°, respectively, where the diffraction peak at 15°-20° is the diffraction peak of the (003) crystal plane, and the diffraction peak at 40°-43° is the diffraction peak of the (104) crystal plane. The presence of the diffraction peaks of the two crystal planes above in the XRD pattern of the positive electrode plate indicates that the positive electrode plate has high structural stability, which is less susceptible to battery inactivation, swelling, cracking, and side reactions with the electrolyte solution (e.g., gas generation) caused by temperature variations during charging and discharging, thereby improving the cycling stability of the battery.

The battery may satisfy: H₁/H₂ + A ≥ 0.6 (e.g., 0.6, 0.7, 0.8, 0.9, 1, 1.1, 1.2, 1.3, 1.4, 1.5, 1.6, 1.7, 1.8, 1.9, or 2). It is found that when the positive electrode plate and the electrolyte solution satisfy the above condition, there is a synergistic cooperation between the positive electrode plate and the electrolyte solution; that is, the positive electrode of the invention enables the formation of a good passivation film on the surface of the positive electrode from the propylene carbonate (PC) in the electrolyte solution, which reduces particle cracking and crystal orientation transformation in the positive electrode material during charging and discharging and also can reduce interfacial reactions, thereby improving the cycling stability and storage performance of the battery.

In the present invention, the synergistic cooperation between the positive electrode plate and the electrolyte solution has enabled the battery to achieve better cycling stability and storage performance than those in the prior art. To further improve the effect, one or more of the technical features can be further optimized.

In an embodiment, the battery satisfies: 0.6 ≤ H₁/H₂ + A ≤ 1.4.

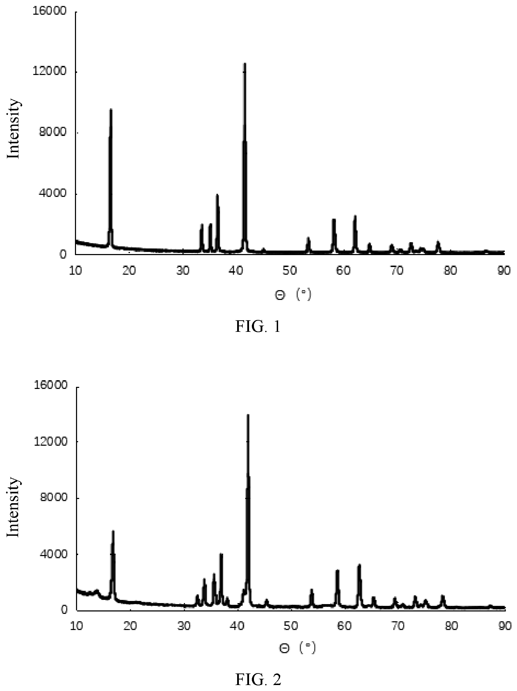

In an embodiment, as illustrated in FIG. 1, the XRD pattern of the positive electrode plate has two diffraction peaks at 15°-20° and 40°-43°, respectively, and the peak intensity H₁ of the diffraction peak at 15°-20° and the peak intensity H₂ of the diffraction peak at 40°-43° satisfy: H₁/H₂ ≥ 0.5. When H₁/H₂ < 0.5, the positive electrode plate has poor structural stability, and the electrolyte solution cannot form a good CEI film on the surface of the positive electrode plate, leading to poor cycling stability and poor storage performance of the battery. When H₁/H₂ ≥ 0.5, the positive electrode plate may have good structural stability, which enables the electrolyte solution to form a good CEI film on the surface of the positive electrode plate to reduce interfacial reactions, thereby improving the cycling stability and storage performance of the battery.

In an embodiment, H₁/H₂ is 0.5-0.9 (e.g., 0.5, 0.55, 0.6, 0.65, 0.7, 0.75, 0.8, 0.85, or 0.9). By further defining the value of H₁/H₂, the positive electrode plate can achieve higher structural stability and lithium-ion intercalation and deintercalation, and the structural stability of the CEI film can also be improved to reduce the interfacial reaction between the positive electrode plate and the electrolyte solution, thereby improving the long-term cycling performance and the storage performance of the battery.

In an embodiment, the electrolyte solution may comprise propylene carbonate (PC), with the content by weight of the ethylene carbonate being 10 wt%-50 wt% (e.g., 10 wt%, 15 wt%, 20 wt%, 25 wt%, 30 wt%, 35 wt%, 40 wt%, 45 wt%, or 50 wt%), based on the total weight of the electrolyte solution. When the content by weight of propylene carbonate is less than 10 wt%, the cycling performance and the storage performance deteriorate sharply; and when the content by weight of propylene carbonate is higher than 50 wt%, the cycling performance and the storage performance deteriorate sharply. When the content by weight of propylene carbonate is controlled in the above range, PC can form a good passivation film on the surface of the positive electrode material of the present invention, which adequately protects the electrolyte solution from being substantially decomposed by the positive electrode. If the content is too low, a non-uniform passivation film is formed; conversely, if the content is too high, an excessively thick passivation film is formed, leading to an overly high impedance and consequent deviations in battery performance.

In an embodiment, the content by weight of the propylene carbonate is 15.4 wt%-40.6 wt%, based on the total weight of the electrolyte solution. By further controlling the content range of propylene carbonate, the synergistic effect between propylene carbonate and the positive electrode plate can be further improved, which in turn enables the formation of a more stable CEI film on the surface of the positive electrode plate, thereby further improving the long-term cycling performance and storage performance of the battery.

In an embodiment, the content by weight of the propylene carbonate is 20 wt%-35 wt%, based on the total weight of the electrolyte solution. By further optimizing the content range of propylene carbonate, the synergistic effect between propylene carbonate and the positive electrode plate can be further greatly improved, which in turn enables the formation of a more stable CEI film on the surface of the positive electrode plate, thereby even further improving the long-term cycling performance and storage performance of the battery.

According to a specific embodiment, the positive electrode plate comprises a composite oxide having a chemical formula of NaₓNiₐFe_{b}Mn_{c}A_{y}O₂, where x satisfies 0.7 ≤ x ≤ 1.05 (e.g., 0.7, 0.75, 0.8, 0.85, 0.9, 0.951, 1, or 1.05), y satisfies 0 ≤ y ≤ 0.5 (e.g., 0, 0.05, 0.1, 0.15, 0.2, 0.25, 0.3, 0.35, 0.4, 0.45, or 0.5), a satisfies 0.3 ≤ a ≤ 1 (e.g., 0.3, 0.4, 0.5, 0.6, 0.7, 0.8, 0.9, or 1), b satisfies 0.1 ≤ b ≤ 0.5 (e.g., 0.1, 0.2, 0.3, 0.4, or 0.5), c satisfies 0.1 ≤ c ≤ 0.5 (e.g., 0.1, 0.2, 0.3, 0.4, or 0.5), and A includes one or more of Li, Mg, Zn, Co, Ca, Ba, Sr, Al, B, Cr, V, Zr, Ti, Sn, Mo, Ru, Si, Sb, Nb, and Te. In the present invention, the positive electrode plate comprising the composite oxide can satisfy H₁/H₂ ≥ 0.5.

In the chemical formula NaₓNiₐFe_{b}Mn_{c}A_{y}O₂ of the composite oxide, the elements conform to the principle that the algebraic sum of the positive and negative valences of the elements in the compound is zero.

In an embodiment, x satisfies 0.9 ≤ x ≤ 1.03.

In an embodiment, y satisfies 0.01 ≤ y ≤ 0.1.

In an embodiment, when the composite oxide does not comprise the doping element A, that is, when y = 0, the chemical formula of the composite oxide is NaₓNiₐFe_{b}Mn_{c}O₂. In the chemical formula NaₓNiₐFe_{b}Mn_{c}O₂, the elements conform to the principle that the algebraic sum of the positive and negative valences of the elements in the compound is zero.

In an embodiment, the composite oxide comprises the doping element A. The composite oxide comprising the doping element A has a higher positive electrode activity stability, which not only prevents the dissolution of transition metal elements during charging and discharging, mitigates corrosion in the electrolyte solution, and thus enhances the stability of the positive electrode material, but also enables the formation of a more stable CEI film on the surface of the positive electrode plate, resulting in fewer interfacial reactions, thereby improving the long-term cycling performance and the storage performance of the battery.

In an embodiment, the composite oxide includes one or more of NaNi_{0.8}Fe_{0.1}Mn_{0.1}O₂, NaNi_{0.6}Fe_{0.2}Mn_{0.2}O₂, NaNi_{0.6}Fe_{0.25}Mn_{0.15}O₂, NaNi_{1/3}Fe_{1/3}Mn_{1/3}Al_{0.04}O₂, NaNi_{0.5}Fe_{0.2}Mn_{0.3}Al_{0.01}O₂, NaNi_{0.5}Fe_{0.2}Mn_{0.3}O₂, and NaNi_{1/3}Fe_{1/3}Mn_{1/3}O₂.

In an embodiment, the positive electrode plate comprises a positive electrode current collector and a positive electrode active material layer that is provided on one or both sides of the positive electrode current collector, wherein the positive electrode active material layer comprises a positive electrode material, which comprises a composite oxide.

In an embodiment, the positive electrode current collector includes an aluminium foil or a porous aluminium foil.

In an embodiment, the positive electrode active material layer comprises a composite oxide.

According to a specific embodiment, the content by weight of the composite oxide is 92 wt%-99 wt% (e.g., 92 wt%, 93 wt%, 94 wt%, 95 wt%, 96 wt%, 97 wt%, 98 wt%, or 99 wt%), based on the total weight of the positive electrode active material layer.

In an embodiment, the content by weight of the composite oxide is 95 wt%-98 wt%, based on the total weight of the positive electrode active material layer.

The composite oxide can be prepared by a method comprising:
(1) mixing a soluble Ni salt, a soluble Fe salt, a soluble Mn salt and a soluble Al-containing salt, and adding same to a solvent to obtain a mixed solution; and adjusting the pH of the mixed solution to obtain a co-precipitate containing Ni, Fe, Mn and Al, followed by solid-liquid separation (e.g., filtration) to obtain a composite precursor; and
(2) drying the composite precursor, and mixing the dried composite precursor with sodium carbonate for high-temperature sintering.

In an embodiment, the soluble Ni salt includes one or more of nickel sulphate and nickel nitrate.

In an embodiment, the soluble Fe salt includes one or more of iron sulphate and iron nitrate.

In an embodiment, the soluble Mn salt includes one or more of manganese sulphate and manganese nitrate.

In an embodiment, the soluble Al-containing salt includes aluminium nitrate.

In an embodiment, the molar ratio of the soluble Ni salt, soluble Fe salt, and soluble Mn salt is a : b : c.

In an embodiment, the solvent includes one or more of water, ethanol, acetone, toluene, and diethyl ether.

In an embodiment, the pH of the mixed solution is adjusted to 3-12 (e.g., 3, 4, 5, 6, 7, 8, 9, 10, 11, or 12).

In an embodiment, the drying is carried out at a temperature of 100°C-1000°C (e.g., 100°C, 200°C, 300°C, 400°C, 500°C, 600°C, 700°C, 800°C, 900°C, or 1000°C) for 1 h-20 h (e.g. 1 h, 3 h, 5 h, 8 h, 10 h, 13 h, 15 h, 18 h, or 20 h).

In an embodiment, the molar ratio of the sodium carbonate to the soluble Ni salt is x : a.

In an embodiment, the high-temperature sintering is carried out at a temperature of 770°C-1000°C (e.g., 770°C, 800°C, 850°C, 900°C, 950°C, or 1000°C) for 10 h-40 h (e.g., 10 h, 15 h, 20 h, 25 h, 30 h, 35 h, or 40 h) in a sintering atmosphere of an air atmosphere, a compressed air atmosphere, a N₂ atmosphere, or an oxygen atmosphere.

In an embodiment, the high-temperature sintering is carried out at a temperature of 800°C-900°C for 20 h-38 h in a sintering atmosphere of a N₂ atmosphere.

According to a specific embodiment, the positive electrode active material layer further comprises a positive electrode conductive agent and a positive electrode binder.

In an embodiment, the positive electrode conductive agent includes one or more of conductive carbon black, acetylene black, Ketjen black, conductive graphite, conductive carbon fibre, carbon nanotube, metal powder and carbon fibre.

In an embodiment, the positive electrode binder includes one or more of polyvinylidene fluoride, styrene-butadiene rubber, styrene-butadiene latex, polytetrafluoroethylene, and polyethylene oxide.

According to a specific embodiment, the content by weight of the positive electrode conductive agent is 0.01 wt%-7 wt% (e.g., 0.01 wt%, 0.05 wt%, 0.1 wt%, 0.5 wt%, 1 wt%, 3 wt%, 5 wt%, or 7 wt%), and the content by weight of the positive electrode binder is 0.1 wt%-8 wt% (e.g., 0.1 wt%, 0.5 wt%, 1 wt%, 3 wt%, 5 wt%, or 8 wt%), based on the total weight of the positive electrode active material layer.

In an embodiment, the content by weight of the positive electrode conductive agent is 0.1 wt%-2.5 wt%, and the content by weight of the positive electrode binder is 0.1 wt%-5 wt%, based on the total weight of the positive electrode active material layer.

In an embodiment, the content by weight of the positive electrode conductive agent is 0.1 wt%-2 wt%, and the content by weight of the positive electrode binder is 0.1 wt%-5 wt%, based on the total weight of the positive electrode active material layer.

In an embodiment, the electrolyte solution comprises sodium bis(fluorosulfonyl)imide (NaFSi). It is found that when NaFSi is comprised in the electrolyte solution, the composite oxide in the positive electrode plate satisfying H₁/H₂ ≥ 0.5 can promote the involvement of anions of NaFSi in forming a CEI film on the surface of the positive electrode plate to reduce the interfacial reaction; furthermore, PC in the electrolyte solution can also promote the dissociation NaFSi to improve the film-forming efficiency, thereby further improving the cycling stability and storage performance of the battery.

According to a specific embodiment, the content by weight of the NaFSi is 0.1 wt%-10 wt% (e.g., 0.1 wt%, 0.5 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 7 wt%, 8 wt%, 9 wt%, or 10 wt%), based on the total weight of the electrolyte solution.

In an embodiment, the content by weight of the NaFSi is 0.2 wt%-6 wt%, based on the total weight of the electrolyte solution.

In an embodiment, the electrolyte solution further comprises ethylene carbonate (EC).

According to a specific embodiment, the content by weight of the ethylene carbonate is less than 5 wt%, based on the total weight of the electrolyte solution. Although ethylene carbonate can also promote the dissociation of NaFSi, the participation of ethylene carbonate in the dissociation process leads to a reaction on the surface of the positive electrode plate, which affects the composition of the CEI film and ultimately results in deteriorated battery performance. By controlling the content of ethylene carbonate in the electrolyte solution to the above range, the impact of ethylene carbonate on the composition of the CEI film can be reduced, thereby reducing the detrimental effect of ethylene carbonate on the battery performance.

In a preferred embodiment, the electrolyte solution comprises no ethylene carbonate. When the electrolyte solution comprises no ethylene carbonate, the decomposition and volatilization of ethylene carbonate during charging and discharging of the battery can be avoided, reducing gas generation in the battery, thus improving the cycling performance and storage performance of the battery.

In an embodiment, the electrolyte solution further comprises 1-hexylpyridinium tetrafluoroborate (HTL) having a structure shown in formula (I),

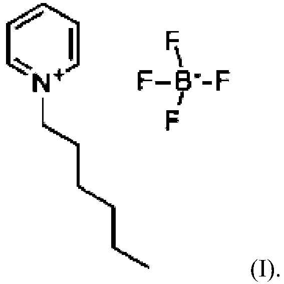

As can be seen from the structure shown in formula (I), 1-hexylpyridinium tetrafluoroborate (HTL) comprises a cation and an anion. These ions can migrate in the electrolyte solution, enabling current conduction in the sodium-ion battery. Furthermore, HTL can improve the stability of the electrolyte solution, and also can form a dense protective film on the surface of the sodium-ion positive electrode.

According to a specific embodiment, the content by weight of the 1-hexylpyridinium tetrafluoroborate is 0.1 wt%-3 wt% (e.g., 0.1 wt%, 0.5 wt%, 1 wt%, 1.5 wt%, 2 wt%, 2.5 wt%, or 3 wt%), based on the total weight of the electrolyte solution.

In an embodiment, the content by weight of the 1-hexylpyridinium tetrafluoroborate is 0.5 wt%-0.8 wt%, based on the total weight of the electrolyte solution.

When used together with the positive electrode plate satisfying H₁/H₂ ≥ 0.5, the HTL additive in the electrolyte solution can form a dense protective film on the surface of the positive electrode, significantly improving the cycling stability and storage performance of the sodium-ion battery.

In an embodiment, the electrolyte solution comprises an electrolyte, an organic solvent, and an additive.

In an embodiment, the electrolyte includes one or more of sodium hexafluorophosphate (NaPF₆) and sodium bis(fluorosulfonyl)imide (NaFSi).

In an embodiment, the additive includes one or more of vinylene carbonate (VC), ethylene sulphate, and 1,3-propanesultone.

In an embodiment, the organic solvent includes one or more of diethyl carbonate (DEC), ethyl methyl carbonate, propylene carbonate, and ethylene carbonate.

In an embodiment, the content by weight of the additive is 0 wt%-15 wt%, based on the total weight of the electrolyte solution. When the content by weight of the additive in the electrolyte solution is 0 wt%, it indicates that no additive is present in the electrolyte solution.

According to a specific embodiment, the content by weight of the electrolyte is 6 wt%-20 wt% (e.g., 6 wt%, 8 wt%, 10 wt%, 12 wt%, 15 wt%, 18 wt%, or 20 wt%), and the content by weight of the additive is 1 wt%-15 wt% (e.g., 1 wt%, 3 wt%, 5 wt%, 7 wt%, 10 wt%, 12 wt%, or 15 wt%), based on the total weight of the electrolyte solution.

In an embodiment, the content by weight of the electrolyte is 9 wt%-15 wt%, and the content by weight of the additive is 2 wt%-10 wt%, based on the total weight of the electrolyte solution.

The content of one or more of the organic solvents including one or more of diethyl carbonate (DEC), ethyl methyl carbonate, propylene carbonate, and ethylene carbonate can be adjusted over a wide range. For example, when the contents by weight of the aforementioned components in the electrolyte solution are less than 100%, the shortfall to 100% can be supplemented with one or more of diethyl carbonate (DEC), ethyl methyl carbonate, propylene carbonate, and ethylene carbonate.

In an embodiment, the battery comprises a negative electrode plate and a separator.

The negative electrode plate may be a conventional negative electrode plate in the art. For example, the negative electrode plate comprises a negative electrode current collector and a negative electrode active material layer that is provided on one or both sides of the negative electrode current collector, wherein the negative electrode active material layer comprises a negative electrode material, a negative electrode conductive agent, a negative electrode binder and a thickener.

In an embodiment, the negative electrode current collector includes a copper foil or a porous copper foil.

In an embodiment, the negative electrode material includes one or more of artificial graphite, natural graphite, mesocarbon microbeads, hard carbon, soft carbon, nano-silicon, a silicon-oxygen material (SiOₓ (0 < x < 2)), and a silicon-carbon material.

In an embodiment, the negative electrode conductive agent includes one or more of conductive carbon black, acetylene black, Ketjen black, conductive graphite, conductive carbon fibre, carbon nanotube, metal powder and carbon fibre.

In an embodiment, the negative electrode binder includes one or more of polyvinylidene fluoride, styrene-butadiene rubber, polytetrafluoroethylene, and polyethylene oxide.

In an embodiment, the thickener includes sodium carboxymethyl cellulose.

According to a specific embodiment, the content by weight of the negative electrode material is 92 wt%-99 wt% (e.g., 92 wt%, 93 wt%, 94 wt%, 95 wt%, 96 wt%, 97 wt%, 98 wt%, or 99 wt%), the content by weight of the conductive agent is 0.1 wt%-7 wt% (e.g., 0.1 wt%, 0.5 wt%, 1 wt%, 3 wt%, 5 wt%, or 7 wt%), the content by weight of the binder is 0.1 wt%-7 wt% (e.g., 0.1 wt%, 0.5 wt%, 1 wt%, 3 wt%, 5 wt%, or 7 wt%), and the content by weight of the thickener is 0.1 wt%-7 wt% (e.g., 0.1 wt%, 0.5 wt%, 1 wt%, 3 wt%, 5 wt%, or 7 wt%), based on the total weight of the negative electrode active material layer.

In an embodiment, the content by weight of the negative electrode material is 94 wt%-98 wt%, the content by weight of the conductive agent is 0.5 wt%-2 wt%, the content by weight of the binder is 0.5 wt%-2 wt%, and the content by weight of the thickener is 0.5 wt%-2 wt%, based on the total weight of the negative electrode active material layer.

According to a specific embodiment, the battery is a sodium-ion battery.

The separator may be a conventional separator in the art. For example, the separator includes one or more of a polyethylene film and a polypropylene film.

The present invention will be described in detail below by means of examples. The examples described in the present invention are merely some, rather than all, of the examples of the present invention. Based on the examples of the invention, all other examples obtained by those of ordinary skill in the art without creative efforts fall within the scope of protection of the invention.

The following examples are intended to illustrate the electrolyte solution and positive electrode plate of the present invention.

### Example 1

### (1) Preparation of ingredients

Positive electrode plate: a composite oxide (NaNi_{1/3}Fe_{1/3}Mn_{1/3}Al_{0.04}O₂), 95 parts by weight; a positive electrode conductive agent (carbon black), 2.5 parts by weight; and a positive electrode binder (polyvinylidene fluoride), 2.5 parts by weight; positive electrode current collector: aluminium foil; and

electrolyte solution: diethyl carbonate (DEC), 59.95 parts by weight, propylene carbonate (PC), 25.95 parts by weight, and NaFSi, 1 part by weight; HTL, 0.6 parts by weight; and electrolyte (sodium hexafluorophosphate (NaPF₆)), 12.5 parts by weight.

### (2) Preparation of composite oxide

1) A soluble Ni salt (nickel sulphate), a soluble Fe salt (iron sulphate), a soluble Mn salt (manganese sulphate) and a soluble Al-containing salt (aluminium nitrate) were mixed at a stoichiometric ratio (with the stoichiometric ratio of Ni/Fe/Mn being 1 : 1 : 1, and the stoichiometric amount of Al being 15% of that of iron), and added to a solvent of H₂O to obtain a mixed solution; an appropriate amount of ammonia water was slowly added to the mixed solution while stirring, and the pH of the mixed solution was adjusted to 11.5 ± 0.2 to obtain a co-precipitate containing Ni, Fe, Mn, and M; and the mixture was filtered to obtain a composite precursor; and
2) the composite precursor from the previous step was washed with deionized water, dried, and then uniformly mixed with sodium carbonate at a stoichiometric ratio, the mixture was subjected to high-temperature sintering at 900°C for 20 h in a N₂ atmosphere, and the sintered product was ground to obtain NaNi_{1/3}Fe_{1/3}Mn_{1/3}Al_{0.04}O₂, denoted as a composite oxide A.

### (3) Preparation of positive electrode plate

The composite oxide A, a conductive agent, and a binder were dispersed in an appropriate amount of N-methylpyrrolidone, and the mixture was thoroughly stirred to form a uniform positive electrode slurry; and the positive electrode slurry was coated onto a positive electrode current collector, followed by drying, rolling, and cutting to obtain a positive electrode plate. In the XRD pattern of the positive electrode plate, two diffraction peaks were present at 16.7° and 41.7°, with the peak intensity H₁ of the diffraction peak at 16.7° being 9458, and the peak intensity H₂ of the diffraction peak at 41.7° being 12575, giving H₁/H₂ = 0.7521.

### (4) Preparation of electrolyte solution

In an argon-filled glove box (H₂O < 0.1 ppm, O₂ < 0.1 ppm), PC and DEC were mixed until uniform, then a thoroughly dried electrolyte (sodium hexafluorophosphate (NaPF₆)) was added thereto and dissolved, and NaFSi and HTL were then added and stirred until uniform; and the resulting solution was qualified by passing the tests for moisture and free acid content, yielding the desired electrolyte solution.

The battery obtained in Example 1 satisfied: H₁/H₂ + A = 0.7521 + 0.2595 = 1.0116 ≥ 0.6.

### Example 1-1

This example was carried out with reference to Example 1, except that EC was added to the electrolyte solution, and HTL was not added. See Table 1 for specific details.

### Example 1-2

This example was carried out with reference to Example 1, except that the parts by weight of HTL in the electrolyte solution were varied. See Table 1 for specific details.

### Example 2

This example was carried out with reference to Example 1, except that no HTL was added to the electrolyte solution and the parts by weight of NaFSi in the electrolyte solution were varied. See Table 1 for specific details.

### Example 2-1

This example was carried out with reference to Example 2, except that EC was added to the electrolyte solution. See Table 1 for specific details.

### Example 2-2

This example was carried out with reference to Example 2, except that HTL was added to the electrolyte solution. See Table 1 for specific details.

### Example 3

This example was carried out with reference to Example 2, except that the parts by weight of PC and NaFSi in the electrolyte solution were varied. See Table 1 for specific details.

### Example 3-1

This example was carried out with reference to Example 3, except that EC was added to the electrolyte solution. See Table 1 for specific details.

### Example 3-2

This example was carried out with reference to Example 3, except that HTL was added to the electrolyte solution. See Table 1 for specific details.

### Example 4

This example was carried out with reference to Example 2, except that the parts by weight of PC and NaFSi in the electrolyte solution were varied. See Table 1 for specific details.

### Example 4-1

This example was carried out with reference to Example 4, except that EC was added to the electrolyte solution. See Table 1 for specific details.

### Example 4-2

This example was carried out with reference to Example 4, except that HTL was added to the electrolyte solution. See Table 1 for specific details.

### Example 4-3

This example was carried out with reference to Example 4-2, except that EC was added to the electrolyte solution. See Table 1 for specific details.

### Example 5

This example was carried out with reference to Example 1, except that the specific choice of the composite oxide was varied by adjusting the element ratio and sintering temperature, and the content of PC in the electrolyte solution was also adjusted. See Table 1 for specific details.

### Example 5-1

This example was carried out according to Example 5, except that the specific choice of the composite oxide was varied by adjusting the element ratio and sintering temperature. See Table 1 for specific details.

### Example 5-2

This example was carried out according to Example 5, except that the specific choice of the composite oxide was varied by adjusting the element ratio and sintering temperature. See Table 1 for specific details.

### Example 6 group

### Example 6-1

This example was carried out with reference to Example 1-2, except that the content of HTL in the electrolyte solution was adjusted. See Table 1 for specific details.

### Example 6-2

This example was carried out according to Example 1-2, except that the content of HTL in the electrolyte solution was adjusted. See Table 1 for specific details.

### Example 7 group

### Example 7-1

This example was carried out with reference to Example 1-2, except that the content of PC in the electrolyte solution was varied and no HTL was added. See Table 1 for specific details.

### Example 7-2

This example was carried out with reference to Example 1-2, except that the content of PC in the electrolyte solution was varied. See Table 1 for specific details.

### Example 7-3

This example was carried out with reference to Example 1-2, except that the content of PC in the electrolyte solution was varied and no HTL was added. See Table 1 for specific details.

### Example 7-4

This example was carried out with reference to Example 1-2, except that the content of PC in the electrolyte solution was varied. See Table 1 for specific details.

### Example 8 group

### Example 8-1

This example was carried out with reference to Example 1-2, except that the content of PC in the electrolyte solution was varied, and no HTL was added. See Table 1 for specific details.

### Example 8-2

This example was carried out with reference to Example 1-2, except that the content of PC in the electrolyte solution was varied. See Table 1 for specific details.

### Example 8-3

This example was carried out with reference to Example 2, except that the content of NaFSi in the electrolyte solution was varied. See Table 1 for specific details.

### Example 8-4

This example was carried out with reference to Example 8-3, except that HTL was added to the electrolyte solution. See Table 1 for specific details.

### Comparative Example 1

Comparative Example 1 was carried out with reference to Example 6, except that the high-temperature sintering step for the composite oxide was carried out at 650°C for 12 h, and the prepared composite oxide was denoted as a composite oxide B. In the XRD pattern of a positive electrode plate comprising the composite oxide B, two diffraction peaks were located at 16.9° and 42.1°, respectively, and the ratio of the peak height H₁ of the diffraction peak at 16.9° to the peak height H₂ of the diffraction peak at 42.1°, i.e., H₁/H₂, was equal to 0.3912.

### Comparative Example 2

Comparative Example 2 was carried out with reference to Comparative Example 1, except that HTL was added to the electrolyte solution. See Table 1 for specific details.

**Table 1**

| | Composite oxide | H1/H2 of positive electrode plate | Content of PC in electrolyte solution | Content of NaFSi in electrolyte solution | Content of EC in electrolyte solution | Content of HTL in electrolyte solution | H1/H2 + A |
|---|---|---|---|---|---|---|---|
| Example 1 | NaNi_{1/3}Fe_{1/3}Mn_{1/3}Al_{0.04}O₂ | 0.7521 | 25.95% | 1% | - | 0.60% | 1.0116 |
| Example 1-1 | * | 0.7521 | 20.95% | 1% | 5% | - | 0.9616 |
| Example 1-2 | * | 0.7521 | 24.95% | 1% | - | 1% | 1.0016 |
| Example 2 | * | 0.7521 | 30.00% | 5% | - | - | 1.0521 |
| Example 2-1 | * | 0.7521 | 20.00% | 5% | 10% | - | 0.9521 |
| Example 2-2 | * | 0.7521 | 29.00% | 5% | - | 1% | 1.0421 |
| Example 3 | * | 0.7521 | 20.00% | 2% | - | - | 0.9521 |
| Example 3-1 | * | 0.7521 | 18.00% | 2% | 2% | - | 0.9321 |
| Example 3-2 | * | 0.7521 | 19.00% | 2% | - | 1% | 0.9421 |
| Example 4 | * | 0.7521 | 35.00% | 2% | - | - | 1.1021 |
| Example 4-1 | * | 0.7521 | 33.00% | 2% | 2% | | 1.0821 |
| Example 4-2 | * | 0.7521 | 34.00% | 2% | - | 1% | 1.0921 |
| Example 4-3 | * | 0.7521 | 32.00% | 2% | 2% | 1% | 1.0721 |
| Example 5 | NaNi_{1/3}Fe_{1/3}Mn_{1/3}O₂ | 0.6432 | 20.00% | 1% | - | - | 0.8432 |
| Example 5-1 | NaNi_{0.5}Fe_{0.2}Mn_{0.3}O₂ | 0.8642 | 20.00% | 1% | - | - | 1.0642 |
| Example 5-2 | NaNi_{0.5}Fe_{0.2}Mn_{0.3}Al_{0.01}O₂ | 0.9152 | 20.00% | 1% | - | - | 1.1152 |
| Example 6-1 | * | 0.7521 | 24.95% | 1% | - | 2.5% | 1.0016 |
| Example 6-2 | * | 0.7521 | 24.95% | 1% | - | 0.7% | 1.0016 |
| Example 7-1 | * | 0.7521 | 10% | 1% | - | - | 0.8521 |
| Example 7-2 | * | 0.7521 | 10% | 1% | - | 1% | 0.8521 |
| Example 7-3 | * | 0.7521 | 50% | 1% | - | - | 1.2521 |
| Example 7-4 | * | 0.7521 | 50% | 1% | - | 1% | 1.2521 |
| Example 8-1 | * | 0.7521 | 26.95% | - | - | - | 1.0116 |
| Example 8-2 | * | 0.7521 | 25.95% | - | - | 1% | 1.0016 |
| Example 8-3 | * | 0.7521 | 18.95% | 8% | - | - | 0.9416 |
| Example 8-4 | * | 0.7521 | 17.95% | 8% | - | 1% | 0.9316 |
| Comparative Example 1 | * | 0.3912 | 20.00% | 1% | - | - | 0.5912 |
| Comparative Example 2 | * | 0.3912 | 20.00% | 1% | - | 1% | 0.5912 |

| | | | | | | | |
|---|---|---|---|---|---|---|---|
| * indicates the same as in Example 1; and - indicates the absence. | | | | | | | |

### Preparation example

Batteries were prepared using the electrolyte solutions and positive electrode plates obtained from the examples and comparative examples, respectively, following the method described below.

### (1) Preparation of positive electrode plate

The positive electrode plates obtained from the examples and comparative examples described above were used, respectively.

### (2) Preparation of negative electrode plate

A negative electrode material (hard carbon), a negative electrode conductive agent (carbon black), a negative electrode binder (styrene-butadiene rubber), and a thickener (sodium carboxymethyl cellulose) were weighed at a weight ratio of 90 : 2.5 : 5.0 : 2.5, dispersed in an appropriate amount of deionized water, and thoroughly stirred to form a uniform negative electrode slurry; and the negative electrode slurry was coated onto a copper foil as a negative electrode current collector, followed by drying, rolling, and cutting to obtain a negative electrode plate.

### (3) Electrolyte solution

The electrolyte solutions obtained from the examples and comparative examples described above were used, respectively.

### (4) Preparation of sodium-ion battery

A positive electrode plate from step (1), a negative electrode plate from step (2), and a separator were stacked in sequence, with the separator sandwiched between the positive and negative electrode plates; electrode tabs were then welded, and the stack was wound to form a jelly roll; and the jelly roll was then placed into an aluminium-plastic film packaging bag, and an electrolyte solution described above was injected, followed by procedures such as vacuum sealing, standing, formation, and shaping to obtain a sodium-ion battery.

### Test examples

1. The positive electrode plates prepared from the composite oxides obtained in the examples and comparative examples were tested by XRD.

The positive electrode plate prepared from the composite oxide in Example 1 was tested by XRD to obtain the XRD pattern of the positive electrode plate in Example 1, as shown in FIG. 1. It can be seen that in the XRD pattern, there were two diffraction peaks at 16-17° and 41-42°, respectively, with the peak height H₁ of the diffraction peak at 16-17° to the peak height H₂ of the diffraction peak at 41-42°, i.e., H₁/H₂, was equal to 0.7521, satisfying: H₁/H₂ ≥ 0.5.

The positive electrode plate prepared from the composite oxide in Example 9 was tested by XRD to obtain the XRD pattern of the positive electrode plate in Comparative Example 1, as shown in FIG. 2. It can be seen that in the XRD pattern, there were two diffraction peaks at 16-17° and 41-42° respectively, with the peak height H₁ of the diffraction peak at 16-17° to the peak height H₂ of the diffraction peak at 41-42°, i.e., H₁/H₂, was equal to 0.3912.

2. The batteries obtained in the examples and comparative examples were tested as follows.

### (1) Test of cycling performance

At 25°C, a sodium-ion battery was charged at a constant current of 0.5 C to the upper limit voltage (4.0 V), then charged at a constant voltage of 4.0 V to 0.05 C, and then left to stand for 5 minutes; and subsequently, the battery was discharged at a constant current of 0.5 C to 1.5 V and then left to stand for 5 minutes. This was a charge-discharge cycle. The battery was charged/discharged in such a way. The discharge capacity of the 1st cycle was recorded as Q₁, and the discharge capacity of the 200th cycle was recorded as Q, respectively. The cycling capacity retention rate = Q₁/Q * 100%. The specific results are shown in Table 2.

### (2) Test of high-temperature storage performance

At 25°C, a sodium-ion battery was charged at a constant current of 0.5 C to the upper limit voltage (4.0 V), then charged at a constant voltage of 4.0 V to 0.05 C, and then left to stand for 5 minutes; and the battery was then discharged at a constant current of 0.5 C to 1.5 V. The battery was then fully charged and stored at 60°C for 30 days. Then, the battery was subjected to one charge/discharge cycle at ambient temperature. The discharge capacity before storage was recorded as N₁, and the discharge capacity after storage was recorded as N, respectively. The storage capacity retention rate = N₁/N * 100%. The specific results are shown in Table 2.

The results are recorded in Table 2.

**Table 2**

| | Cycling capacity retention rate | Storage capacity retention rate |
|---|---|---|
| Example 1 | 68.84% | 89.37% |
| Example 1-1 | 47.65% | 62.27% |
| Example 1-2 | 75.45% | 87.42% |
| Example 2 | 63.14% | 78.62% |
| Example 2-1 | 42.52% | 59.49% |
| Example 2-2 | 75.90% | 84.69% |
| Example 3 | 60.98% | 77.94% |
| Example 3-1 | 46.65% | 68.38% |
| Example 3-2 | 73.89% | 86.97% |
| Example 4 | 65.35% | 71.45% |
| Example 4-1 | 46.13% | 67.95% |
| Example 4-2 | 79.02% | 81.86% |
| Example 4-3 | 44.72% | 64.96% |
| Example 5 | 76.47% | 81.12% |
| Example 5-1 | 74.65% | 83.62% |
| Example 5-2 | 59.40% | 70.41% |
| Example 6-1 | 45.80% | 66.37% |
| Example 6-2 | 47.73% | 68.43% |
| Example 7-1 | 40.12% | 55.26% |
| Example 7-2 | 42.37% | 51.60% |
| Example 7-3 | 35.08% | 56.78% |
| Example 7-4 | 37.32% | 51.28% |
| Example 8-1 | 33.51% | 52.2% |
| Example 8-2 | 47.36% | 58.31% |
| Example 8-3 | 41.96% | 46.6% |
| Example 8-4 | 30.49% | 55.13% |
| Comparative Example 1 | 25.32% | 45.12% |
| Comparative Example 2 | 29.45% | 41.08% |

As can be seen from Table 2, the cycling capacity retention rate and the storage capacity retention rate of the batteries in the examples were significantly improved compared with those in the comparative examples, indicating that the synergistic cooperation of the positive electrode plate and the electrolyte solution in the battery of the present invention enables the battery to have improved cycling stability and storage performance.

The preferred embodiments of the present invention have been described in detail above; however, the present invention is not limited thereto. Within the technical concept of the present invention, various simple modifications can be made to the technical solution of the present invention, including the combination of various technical features in any other suitable way. These simple modifications and combinations should also be regarded as the content disclosed by the present invention and all fall within the scope of protection of the present invention.

## Claims

1. A battery, **characterized in that** the battery comprises a positive electrode plate and an electrolyte solution, wherein the positive electrode plate has an XRD pattern comprising two diffraction peaks at 15°-20° and 40°-43°, with the peak intensity of the diffraction peak at 15°-20° being H₁, and the peak intensity of the diffraction peak at 40°-43° being H₂; the electrolyte solution comprises propylene carbonate, with the content by weight of the propylene carbonate being A, based on the total weight of the electrolyte solution; and the battery satisfies: H₁/H₂ + A ≥ 0.6.

2. The battery according to claim 1, **characterized in that** the battery satisfies: 0.6 ≤ H₁/H₂ + A ≤ 1.4.

3. The battery according to claim 1 or 2, **characterized in that** the peak intensity H₁ of the diffraction peak at 15°-20° and the peak intensity H₂ of the diffraction peak at 40°-43° satisfy: H₁/H₂ ≥ 0.5, and preferably, H₁/H₂ is 0.5-0.9.

4. The battery according to any one of claims 1-3, **characterized in that** the content A by weight of the propylene carbonate is 10 wt%-50 wt%, based on the total weight of the electrolyte solution.

5. The battery according to any one of claims 1-4, **characterized in that** the positive electrode plate comprises a positive electrode active material, which comprises a composite oxide having a chemical formula of NaₓNiₐFe_{b}Mn_{c}A_{y}O₂, where x satisfies 0.7 ≤ x ≤ 1.05, y satisfies 0 ≤ y ≤ 0.5, and the doping element A comprises one or more of Li, Mg, Zn, Co, Ca, Ba, Sr, Al, B, Cr, V, Zr, Ti, Sn, Mo, Ru, Si, Sb, Nb, Zr, and Te.

6. The battery according to claim 5, **characterized in that** the composite oxide comprises one or more of NaNi_{0.8}Fe_{0.1}Mn_{0.1}O₂, NaNi_{0.6}Fe_{0.2}Mn_{0.2}O₂, NaNi_{0.6}Fe_{0.25}Mn_{0.15}O₂, NaNi_{1/3}Fe_{1/3}Mn_{1/3}Al_{0.04}O₂, NaNi_{0.5}Fe_{0.2}Mn_{0.3}Al_{0.01}O₂, NaNi_{0.5}Fe_{0.2}Mn_{0.3}O₂, and NaNi_{1/3}Fe_{1/3}Mn_{1/3}O₂.

7. The battery according to claim 5 or 6, **characterized in that** the positive electrode plate comprises a positive electrode active material layer, and the positive electrode active material layer comprises a composite oxide, with the content by weight of the composite oxide being 92 wt%-99 wt%, preferably 95 wt%-98 wt%, based on the total weight of the positive electrode active material layer.

8. The battery according to claim 7, **characterized in that** the positive electrode active material layer further comprises a positive electrode conductive agent and a positive electrode binder, with the content by weight of the positive electrode conductive agent being 0.01 wt%-7 wt%, and the content by weight of the positive electrode binder being 0.1 wt%-8 wt%, based on the total weight of the positive electrode active material layer; and
preferably, the content by weight of the positive electrode conductive agent is 0.1 wt%-2 wt%, and the content by weight of the positive electrode binder is 0.1 wt%-5 wt%, based on the total weight of the positive electrode active material layer.

9. The battery according to any one of claims 1-8, **characterized in that** the content by weight of the propylene carbonate is 15.4 wt%-40.6 wt%, preferably 20 wt%-35 wt%, based on the total weight of the electrolyte solution.

10. The battery according to any one of claims 1-9, **characterized in that** the electrolyte solution comprises NaFSi, with the content by weight of the NaFSi being 0.1 wt%-10 wt%, preferably 0.2 wt%-6 wt%, based on the total weight of the electrolyte solution.

11. The battery according to any one of claims 1-10, **characterized in that** the electrolyte solution further comprises 1-hexylpyridinium tetrafluoroborate; and
preferably, the content by weight of the 1-hexylpyridinium tetrafluoroborate is 0.1 wt%-3 wt%, preferably 0.5 wt%-0.8 wt%, based on the total weight of the electrolyte solution.

12. The battery according to any one of claims 1-11, **characterized in that** the electrolyte solution further comprises ethylene carbonate, with the content by weight of the ethylene carbonate being less than 5 wt%, based on the total weight of the electrolyte solution.

13. The battery according to any one of claims 1-11, **characterized in that** the electrolyte solution comprises no ethylene carbonate.

14. The electrolyte solution according to any one of claims 1-13, **characterized in that** the electrolyte solution further comprises 1-hexylpyridinium tetrafluoroborate having a structure shown in formula (I),

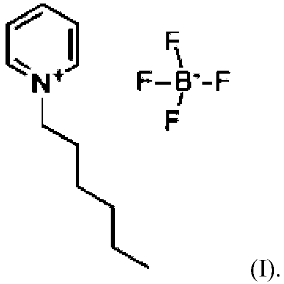

15. The electrolyte solution according to claim 14, **characterized in that** the content by weight of the 1-hexylpyridinium tetrafluoroborate is 0.1 wt%-3 wt%, preferably 0.5 wt%-0.8 wt%, based on the total weight of the electrolyte solution.
